# EUROPEAN PATENT APPLICATION

(11) **EP 4 478 718 A1**
(43) Date of publication of application: **18.12.2024**
(21) Application number: 23305955.9
(22) Date of filing: 15.06.2023
(51) Int. Cl.: H04N 21/236, H04N 25/47

(54) **TRANSMISSION OF AN EVENT STREAM THROUGH A MIPI CAMERA SERIAL INTERFACE**

(71) Applicant: Prophesee, 75012 Paris (FR)
(72) Inventor: SCHWAMBACH, Vitor, 75012 PARIS (FR); CHOTARD, Ludovic, 38120 SAINT EGREVE (FR); SCHON, Guillaume, 75012 PARIS (FR); NAGULESWARAN, Thulaxan, 75012 PARIS (FR); DOISNEAU, Pierre-Antoine, 75012 PARIS (FR)
(74) Representative: de Jong, Jean Jacques

(57) **Abstract**

A method for transmitting an event stream produced by an event-based vision sensor (10) over an interface (14, 16) configured to transmit data in successive packets (H-CS) grouped in successive frames (FS-FE) comprises the steps of assigning a period to the frames; reading events with respective timestamps from the event stream; and filling packets of a current frame only with events that have a timestamp within the period of the current frame.

## Description

### Technical Field

The invention relates to the transmission of events produced by an event-based camera to an end device through a standard interface.

### Background

Standard camera interfaces in principle allow interoperability between cameras and end devices of different manufacturers. For instance, the MIPI Camera Serial Interface (CSI-2) is designed to convey video produced by a camera to an end device such as a display. This interface provides a proven and robust way of transmitting data, with differential lines, error detection and correction capability, as well as low-power modes.

Such interfaces were initially designed for frame-based camera systems and rely heavily on the concept of frames conveying fixed amounts of pixel data according to a raster scan pattern of a sensor array. Event-based cameras produce event streams in which events are transmitted in the order of occurrence and not in the spatial order of the sensor array. Moreover, only events that have triggered are transmitted, meaning that the transmission has a variable rate and does not represent all the pixels of the camera, which is in principle incompatible with the concept of frames.

It would be of interest to use the features of a standard camera interface, such as MIPI CSI-2, for transmitting event streams produced by an event-based camera to an end device.

### Summary

A method is generally disclosed for transmitting an event stream produced by an event-based vision sensor over an interface configured to transmit data in successive packets grouped in successive frames, comprising the steps of assigning a period to the frames; reading events with respective timestamps from the event stream; and filling packets of a current frame only with events that have a timestamp within the period of the current frame.

The method may comprise the further step of inserting a master end of frame marker immediately after the events in a last packet of the frame.

The method may further comprise the steps of assigning a fixed capacity of events to each packet; filling the packets successively to their capacity; and when the number of events is insufficient for filling a last packet of the frame, filling the remaining space of the last packet with padding events.

The method may further comprise the steps of transmitting a fixed number of packets in each frame; and when the number of events is insufficient for filling all the packets of the frame, filling the remaining packets with padding events.

The method may further comprise the steps of assigning a period to the packets; and filling a current packet of the current frame only with events that have a timestamp within the period of the current packet.

The event stream may include at least synchronization events occurring at a period smaller than the packet period, whereby a fixed number of packets is formed for each frame, wherein each packet includes at least a synchronization event.

The method may further comprise the steps of assigning a fixed capacity of events to each packet; and when the number of events filling a current packet is smaller than the capacity of the packet, filling the remaining capacity of the packet with padding events.

The padding events of a packet may be inserted before a checksum suffix of the packet.

The interface may be a MIPI CSI-2 interface, wherein each frame has a frame start prefix, a frame end suffix, and each packet further has a header prefix and a checksum suffix.

### Brief Description of the Drawings

Embodiments will be exposed in the following description provided for exemplary purposes only, in relation to the appended drawings, in which:
Figure 1 is a block diagram of a transmission chain from an event-based camera to an end device or application using a MIPI interface;
Figure 2 illustrates a MIPI CSI-2 frame, filled according to a first embodiment for transmitting data of an event stream;
Figure 3 illustrates a MIPI CSI-2 frame, filled according to a second embodiment for transmitting data of an event stream;
Figure 4 illustrates a MIPI CSI-2 frame, filled according to a third embodiment for transmitting data of an event stream; and
Figure 5 illustrates a MIPI CSI-2 frame, filled according to a fourth embodiment for transmitting data of an event stream.

### Detailed Description

A MIPI CSI-2 interface is designed in practice for transmitting video data according to frames and raster-scanned pixels. More specifically, each frame is delimited by a Frame Start prefix FS and a Frame End suffix FE. Each frame is moreover subdivided into a number of packets that correspond in practice to respective rows of pixels. Hence successively transmitted frames define a frame rate, and the successive packets transmitted for each frame correspond to a row scan rate. The number and size of the packets is configurable according to the type of frame-based video to be transmitted.

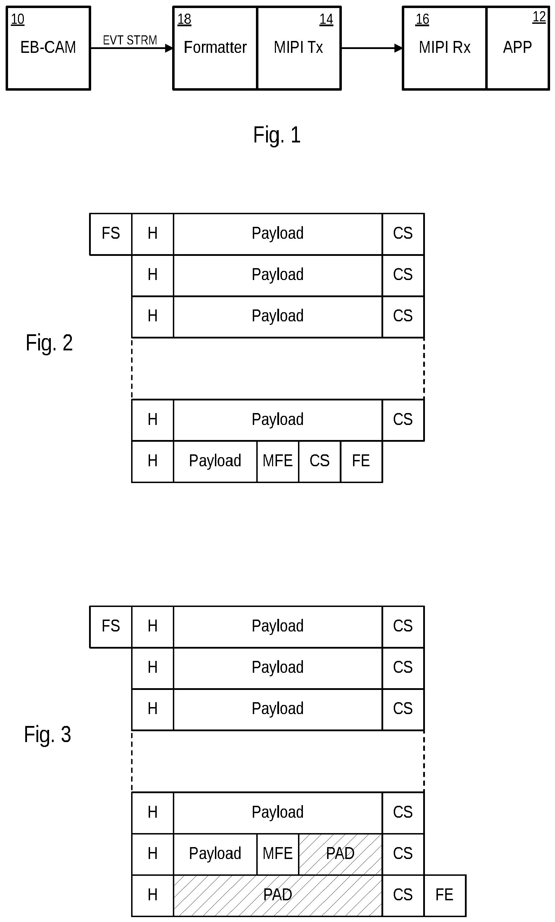

Figure 1 is a block diagram of a transmission chain from an event-based camera 10 to a and end device or application 12 through a MIPI interface. The MIPI interface includes a transmitter 14 on the camera side and a receiver 16 on the end device side, connected through a differential link. The MIPI transmitter receives an event stream from the camera 10 through a formatter circuit 18 in charge of transforming the event stream into frames and packets according to the MIPI standards.

In principle, a standard-compliant receiver interface merely extracts the payloads from the packets and transmits the concatenated payloads to an end device or application that is specifically designed to process the payloads.

In a trivial approach for transmitting event streams over a MIPI CSI-2 interface, the event data could simply be inserted as payloads in successive packets of same length, and each frame transmitted when all its packets have thus been filled. In such a case, there is no direct relationship between the timestamp of the events in the stream being transmitted and the MIPI frame and packet timing.

This approach is however not viable, because events do not occur periodically, whereby the frame rate would vary with the significantly variable event rate beyond the specifications of the standards.

A better approach is illustrated in figure 2 as a first embodiment. This figure shows the general structure of a MIPI CSI-2 frame. As mentioned earlier, each frame is delimited by a Frame Start prefix FS and a Frame End suffix FE. The frame is subdivided in packets, each bearing a payload with a header prefix H and a checksum suffix CS.

The formatter 18 is configured to produce frames at a constant rate from the event stream, whereby each frame is allocated a fixed transmission period. The frame rate may be selected in practice between 10fps and 1Kfps. In forming a current frame for transmission, the formatter 18 reads the timestamps of the incoming events and inserts into the current frame only the events that have a timestamp within the period of the frame, thus establishing a relationship between the timestamp of the events in the stream and the MIPI frame timing.

More specifically, as shown in figure 2, the packets of the frame are filled to a same specified length until no further events match the timestamp constraint. A last packet is thus generally incompletely filled, as shown, and the number of packets may be below the traditionally expected number for a frame-based camera.

Although the resulting frame may comply with the MIPI standards, its structure is unusual in the field where the MIPI CSI-2 interface is most used, i.e., frame-based cameras, because the length of the last packet is variable, and the number of packets in a frame is also variable. Many receiver devices designed for frame-based cameras have thus omitted the added complexity of handling frames with packets of variable length, whereby the last packet of the frame, generally shorter than the rest, may cause a processing failure in the receiver device.

In particular, in such receivers, a specification of the MIPI CSI-2 standard by which the packet headers H include a packet "word count" is often disregarded, whereby the receiver interface does not notify the end application of a packet end, or the amount of data transferred.

As shown in figure 2, the end of the event data in the frame may be marked by a Master Frame End suffix MFE inserted in the end of the payload of the last packet of a frame, just before the insertion of the checksum CS in this last packet. The checksum calculation thus also involves the MFE marker. The MFE marker may thus be used by the end application to identify the end of the event data, even if the receiver does not notify the application of the received payload data size for the frame.

Figure 3 illustrates an embodiment that is compatible with receiver interfaces that expect frames with packets of fixed length or that disregard the word count information in the packet headers. The payload of the last packet containing event data is filled with padding events up to the expected packet length between the MFE marker and the checksum CS. This last checksum CS is thus calculated also over the padding events and is aligned with the other checksums, at a position where it is expected by the receiver.

The padding events and the MFE marker are not specified by the MIPI standards, since they are part of the payload, which may be arbitrary from the standard's point of view. Thus, the MFE marker and the payload data may be specified for the design of the event stream formatter 18 and the corresponding end application.

A padding event may be an empty event or an event conveying only a timestamp, or simply arbitrary dummy data, since the data after the MFE marker is in principle ignored by the end application. The dummy data may be a series of bits set to a same state, 1 or 0, which has the advantage of lowering the transmission power, since such data does not generate state transitions.

In the case where the receiver device also expects a fixed number of packets per frame, the missing packets up to the expected number are created with just padding events, as shown for the last packet in figure 3.

Although the embodiments of figures 2 and 3 provide frames at a fixed frame rate, the time required for filling each packet varies with the event rate. In some situations, a given packet may start filling with a series of events and then pause as the event rate drops momentarily to zero before the packet is full. As a consequence, the packet transmission is delayed until the event rate rises again to finish filling the packet, which is unsatisfactory in most cases where events should be received promptly after they occur. This results in added latency and jitter in packet send times.

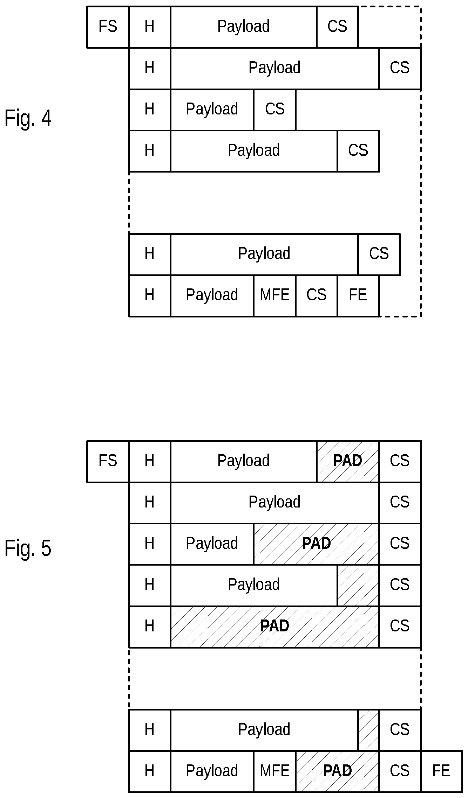

Figure 4 illustrates a preferred event stream formatting embodiment that avoids large delays in transmitting event data. The formatter 18 is configured to produce a specified number of packets for each frame, whereby each packet is allocated a fixed transmission period, equal to a frame transmission period divided by the number of packets. In forming a current packet for transmission, the formatter 18 reads the timestamps of the incoming events and inserts into the current packet only the events that have a timestamp within the period allocated to the packet, thus creating a relationship between the timestamp of events in the stream with the MIPI packet timing.

More specifically, as shown in figure 4, each packet is filled until no further events match the timestamp constraint, after which the next packet is selected for filling. As a result, the packets have varying lengths, depending on the event rate variation. Hence the word counts in the headers H of the packets are set by the transmitter interface to reflect this situation.

In practice, a maximum capacity is set for the packets. The MIPI CSI-2 standard allows a size up to 64KB. A trade-off between latency and transmission efficiency however lies in smaller values, such as 8KB, offering a satisfactory latency and a transmission efficiency of 97%.

In some situations, the number of events that match the timestamp constraint for a current packet may exceed the packet capacity. In such a case, three possibilities arise. As a first alternative, the events exceeding the packet capacity are dropped and not transmitted. As a second alternative, the events exceeding the packet capacity are inserted in a next packet, and that next packet is allocated to the same period, whereby multiple consecutive packets may contain events with timestamps corresponding to a same packet period. As a third alternative, the events exceeding the packet capacity are inserted in the next packet, and that next packet is allocated to the current period plus the subsequent period. Hence, this next packet is allocated to events that have timestamps spanning two periods.

The timestamp constraint conditions may be expressed as follows, for example. Each packet is allocated a fixed period Tₚ equal to T_{f}/N, where T_{f} is the frame period and N the number of packets per frame. An event is inserted in a current packet only if its timestamp TSᵢ is comprised between TS₀ and TS₀ + Tₚ, where TS₀ is the timestamp of the first event inserted in the current packet or, where applicable, in a previous packet allocated to the same period. When implementing the third alternative mentioned above, after the first packet has been filled, an event is inserted in the next packet when its timestamp is comprised between TS₀ and TS₀ + 2Tₚ.

Such an allocation of periods to packets is transparent to the end application, and no corresponding information needs to be transmitted - the receiver interface will, in principle, extract the payloads from the packets and concatenate them for transmission to the end device or application. The mechanism is only used to create standard-compliant packets that can be transmitted as soon as possible based on the timestamps of the events, resulting in a MIPI stream with less jitter on the packet transmit time intervals than the trivial approach

In another situation where the event rate is low or drops significantly while filling a frame, there may not be sufficient events to insert in each packet, whereby the number of packets may not reach the number specified for the frame. This situation is avoided in practice by the fact that, even if no events are generated over a long period of time, an event-based camera will still periodically insert synchronization events in the stream, which events only convey a timestamp. The period of such events may be smaller than the period Tₚ allocated to the packets, whereby all the packets are necessarily used, each containing at least one synchronization event.

The embodiment of figure 4 requires that the receiver interface be fully standard-compliant and thus use the packet word counts in order to correctly extract the payloads. As previously mentioned, many receiver interfaces expect fixed length packets and ignore the word counts.

Figure 5 illustrates a variation of the embodiment of figure 4 that is compatible with receiver interfaces that expect a fixed packet length and fixed number of packets per frame, thus resulting in a fixed frame size. A fixed capacity is assigned to the packets within the limits specified by the standards, for instance 8KB. When a currently received event has a timestamp outside the current packet period, the current event is kept for the next packet while the remainder of the current packet is filled with padding events up to the capacity of the packet. The padding events are inserted before the checksum CS, whereby the checksum is at an expected position and also involves the padding events in its calculation.

To preserve compatibility with a fully standard compliant receiver interface, the word counts in the packet headers are all set to the fixed size of the packets, i.e., they account for the payload and the padding events in each packet.

As shown, in all packets but the last, there is no marker inserted between the payload and the padding events. This increases the transmission efficiency, but the end application will not know where the padding events start in each packet, unless the padding events have a recognizable format. Indeed, the receiver interface will also extract and forward the padding, since the padding is indistinguishable from the payload for the receiver interface. The padding events may have a proper event format but convey no information, or simply convey a timestamp. Such events will be correctly parsed by the end application but will be ignored since they require no further processing.

## Claims

1. A method for transmitting an event stream produced by an event-based vision sensor (10) over an interface (14, 16) configured to transmit data in successive packets (H-CS) grouped in successive frames (FS-FE), comprising:
assigning a period to the frames;
reading events with respective timestamps from the event stream; and
filling packets of a current frame only with events that have a timestamp within the period of the current frame.

2. The method of claim 1, comprising the further step of inserting a master end of frame marker (MFE) immediately after the events in a last packet of the frame.

3. The method of claim 1, further comprising:
assigning a fixed capacity of events to each packet;
filling the packets successively to their capacity; and
when the number of events is insufficient for filling a last packet of the frame, filling the remaining space of the last packet with padding events.

4. The method of claim 3, further comprising:
transmitting a fixed number of packets in each frame; and
when the number of events is insufficient for filling all the packets of the frame, filling the remaining packets with padding events.

5. The method of claim 1, further comprising:
assigning a period to the packets; and
filling a current packet of the current frame only with events that have a timestamp within the period of the current packet.

6. The method of claim 5, wherein the event stream includes at least synchronization events occurring at a period smaller than the packet period, whereby a fixed number of packets is formed for each frame, wherein each packet includes at least a synchronization event.

7. The method of claim 6, further comprising:
assigning a fixed capacity of events to each packet; and
when the number of events filling a current packet is smaller than the capacity of the packet, filling the remaining capacity of the packet with padding events.

8. The method of claim 7, wherein the padding events of a packet are inserted before a checksum suffix (CS) of the packet.

9. The method of claim 1, wherein the interface is a MIPI CSI-2 interface, wherein each frame has a frame start prefix (FS), a frame end suffix (FE), and each packet further has a header prefix (H) and a checksum suffix (CS).

10. An interface for transmitting an event stream produced by an event-based vision sensor (10), configured to:
transmit data in successive packets (H-CS) grouped in successive frames (FS-FE);
assign a period to the frames;
read events with respective timestamps from the event stream; and
fill packets of a current frame only with events that have a timestamp within the period of the current frame.

11. The interface of claim 10, further configured to:
assign a period to the packets; and
fill a current packet of the current frame only with events that have a timestamp within the period of the current packet.

12. The interface of claim 11, wherein the event stream includes at least synchronization events occurring at a period smaller than the packet period, whereby a fixed number of packets is formed for each frame, wherein each packet includes at least a synchronization event.

13. The interface of claim 12, further configured to:
assign a fixed capacity of events to each packet; and
when the number of events filling a current packet is smaller than the capacity of the packet, filling the remaining capacity of the packet with padding events.
